# EUROPÄISCHE PATENTANMELDUNG

(11) **EP 2 910 502 A1**
(43) Veröffentlichungstag der Anmeldung: **26.08.2015**
(21) Anmeldenummer: 14156182.9
(22) Anmeldetag: 21.02.2014
(51) Int. Cl.: B65G 47/26

(54) **Staudrucklose Fördervorrichtung, Steuerungsverfahren sowie Zonensteuereinheit**

(71) Anmelder: Wegener + Stapel Fördertechnik GmbH, 29303 Bergen (DE)
(72) Erfinder: Bortels, Wolfgang, 29303 Bergen (DE); Lübke, Siegfried, 29303 Bergen (DE); Brunen, Rüdiger, 29303 Bergen (DE)
(74) Vertreter: Hansen, Jochen

(57) **Zusammenfassung**

Die Erfindung betrifft eine staudrucklose Fördervorrichtung zum Transport von Stückgütern umfassend eine Rollenförderanordnung mit einer Mehrzahl von einzelnen Förderzonen, jeweils ausgestattet mit wenigstens einer Stückgütersensoranordnung, einem Förderantrieb und einer elektronischen Zonensteuereinheit sowie ein Staudrucklosfördervorrichtungssteuerungsverfahren und eine Zonensteuereinheit.

## Beschreibung

Die Erfindung betrifft eine staudrucklose Fördervorrichtung zum Transport von Stückgütern umfassend eine Rollenförderanordnung mit einer Mehrzahl von einzelnen Förderzonen, jeweils ausgestattet mit wenigstens einer Stückgütersensoranordnung, einem Förderantrieb und einer elektronischen Zonensteuereinheit.

Ferner betrifft die Erfindung ein Steuerungsverfahren zur Ansteuerung einer staudrucklosen Fördervorrichtung sowie eine Zonensteuereinheit.

Aus dem Stand der Technik sind unterschiedliche staudrucklose Fördervorrichtungen bekannt, bei denen in Förderrichtung aneinander anschließende Förderzonen hintereinander geschaltet sind. Jede Förderzone weist üblicherweise eine Sensoranordnung, einen Förderantrieb sowie eine elektronische Steuereinheit, die dieser Zone zugeordnet ist, auf. Der Förderantrieb wird in der Regel unter Hinzunahme der Signale der Sensoranordnung durch die elektronische Steuereinheit gesteuert, wodurch sich Stückgüter staudrucklos fördern lassen. Mithilfe dieser staudrucklosen Fördervorrichtungen werden Stückgüter, beispielsweise Bauteile, Halbzeuge oder Bauelemente und dergleichen von einem Ort, beispielsweise einem Lager, zu einem Fertigungsplatz gefördert.

Exemplarisch sei auf die Druckschrift DE 298 18 839 U1 verwiesen, aus der eine Staudrucklos-Fördereinrichtung bekannt ist, die mit einzelnen Stauplatzabschnitten, Lichttastern sowie entsprechenden Fördermitteln und Bremseinheiten arbeitet.

Aus der Druckschrift DE 44 12 493 C2 ist ein Staugutförderer für Stückgut bekannt, bei dem die vorgesehenen Elektronikmodule neben einer Steuerfunktion eine Regelfunktion übernehmen.

Probleme des Standes der Technik sind vor allem der hohe Erstinstallationsaufwand eines staudrucklosen Fördersystems durch die erstmalige Einrichtung des üblicherweise vorgesehenen und mittels einer SPSangesteuerten Systembuses und den daran angeschlossenen softwareseitig zu programmierenden Zonensteuereinheiten.

Insbesondere problematisch ist auch der spätere Ausfall eines der Zonensteuereinheiten im laufenden Betrieb, da mit den derzeitig am Markt erhältlichen Produkten nicht einfach ein durch einen hauseigenen Techniker der Anwenderfirma eine defekte Zonensteuereinheit durch eine in Reserve vorgehaltene Zonensteuereinheit ausgetauscht werden kann, da es oftmals den hauseigenen Technikern der Anwenderfirmen an Programmierkenntnissen fehlt und es somit zu erheblichen Ausfallzeiten kommt.

Ferner problematisch ist die Abhängigkeit der Fördersysteme von SPS-Systemen, die für im Stand der Technik bekannte staudrucklose Förderanordnungen notwendig sind. Es ist der Wunsch nach einem autarken System mit nur wenigen Bauteilen, wobei diese bevorzugt Standardbauteile sein sollen.

Die Aufgabe der Erfindung besteht darin, eine staudrucklose Fördervorrichtung zum Transport von Stückgütern, ein dazugehöriges staudrucklos-Fördervorrichtungssteuerungsverfahren sowie eine Zonensteuereinheit zur Integration in eine staudrucklose Fördervorrichtung anzugeben, die es ermöglichen ein staudruckloses Fördersystem durch einfache Kombination von einzelnen Komponenten kostengünstig erstmalig in Betrieb zu nehmen, kostengünstig zu warten und kostengünstig als auch kurzfristig umzubauen, zu erweitern und/oder abzuändern, wobei das System vollständig autark und mit nur wenigen Bauteilkomponenten arbeiten soll und zudem kostengünstig im Betrieb ist.

Diesbezüglich besteht eine weitere Aufgabe darin, den Energieverbrauch einer staudrucklosen Stückgutförderanlage auf ein Minimum zu reduzieren. Eine weitere Aufgabe besteht darin, in der Wahl der Anbaukomponenten, wie Sensorik und Förderantriebe flexibel und unabhängig auswählen zu können.

Gelöst wird diese Aufgabe mit einer staudrucklosen Fördervorrichtung nach Anspruch 1, einem Staudrucklosfördervorrichtungssteuerungsverfahren nach Anspruch 8 sowie einer Zonensteuereinheit nach Anspruch 9.

Staudrucklose Fördervorrichtung zum Transport von Stückgütern umfassend eine Rollenförderanordnung mit einer Mehrzahl von einzelnen Förderzonen, jeweils ausgestattet mit wenigstens:
- einer Stückgütersensoranordnung,
- einem Förderantrieb und
- einer elektronischen Zonensteuereinheit,
wobei die Zonensteuereinheit einen Leistungsteil mit einer Leistungsstromzufuhr zur Versorgung des jeweils zugeordneten Förderantriebs und einen Logik-Regel-Steuerteil mit einer Signalleitung aufweist, wobei die Signalleitung wenigstens die jeweils benachbarten, nämlich die stromabwärtige und die stromaufwärtige Zonensteuereinheiten miteinander kommunizierend verbindet,
die Zonensteuereinheit mittels der Stückgütersensoranordnung eine vorliegende Stückgütersituation, nämlich 'Stückgut in Förderzone vorhanden' oder 'Förderzone frei', der jeweiligen Förderzone erkennt,
die Zonensteuereinheit mittels der Leistungsstromzufuhr den jeweils zugeordneten Förderantrieb bedarfsweise ansteuert und
die Zonensteuereinheit die Stückgütersituation an die stromaufwärtigen und stromabwärtigen Zonensteuereinheiten kommuniziert, wobei ein Stückgütertransport von einer Förderzone zur anderen durch Übernahme des Stückgutes von der stromaufwärtigen Förderzone durch Aktivieren des Förderantriebes nur erfolgt, wenn die stromaufwärtige Zonensteuereinheit die Meldung 'Stückgut in Förderzone vorhanden' meldet und die Zonensteuereinheit der Stückgut aufnehmenden Förderzone 'Förderplatz frei' meldet, wobei die Zonensteuereinheit derart ausgebildet ist, dass die nicht benötigten Förderantriebe sofort oder nach einer Leerlaufzeit von weniger als 8 Sekunden nicht oder nicht mehr mit Strom versorgt werden
und wobei die Logik-Regel-Steuersoftware vollständig in jeder Zonensteuereinheit vorhanden ist und in jeder Zonensteuereinheit über Schalter in der Zonensteuereinheit einstell- und individualisierbar ist.

Durch diese Ausgestaltung ist es möglich, die Ausfallzeit einer Komplettförderanlage sehr kurz zu halten, da jede Förderzone über die exakt selben Komponenten verfügt und ein normaler Haustechniker ohne Programmierkenntnisse auf einfachste Weise, nämlich durch Austausch der einzelnen Komponenten, insbesondere der Zonensteuereinheit, Reparaturen an der Förderanlage vornehmen kann. Hierzu wird beispielsweise zum Austausch der Zonensteuereinheit eine neue Zonensteuereinheit montiert und angeschlossen und im Anschluss durch die richtige Wahl der Schalter die Software der Zonensteuereinheit eingestellt und individualisiert. Es bedarf nicht einer Vergabe einer SPS-auslesbaren Modulnummer, sondern lediglich der Parametrisierung der einzelnen Zonensteuereinheit, da die einzelnen Zonensteuereinheiten lediglich mit der nächsten stromabwärtigen und stromaufwärtigen Zonensteuereinheit kommunizieren. Zur Einstellung der Schalter braucht der Techniker lediglich die Einstellung der alten Box 1:1 zu übernehmen und im Anschluss an die Einstellung und dem Austausch müssen lediglich die vorhandenen Kabel erneut oder wieder befestigt werden.

Durch den Verzicht einer zentralen Steuerbox ist man zudem flexibel in der Erweiterung. Ein flexibles Erweitern ist jederzeit möglich, was die Möglichkeit eröffnet kurzfristige Umbaumaßnahmen an der Förderanlage durchzuführen, um eine andere Streckenführung zu realisieren. Ferner ist es möglich Zwischenförderabschnitte in eine bestehende Anlage einzufügen und diese kurzfristig in Betrieb zu nehmen.

Die in der Zonensteuereinheit integrierte Logik-Regel-Steuereinheit weist eine für die Sensorauswertung vorgesehene automatische Rückstellfunktion auf. Wird die Stückgütersensoranordnung beim Abtransportieren des Stückgutes aus der Förderzone nach einigen Sekunden nicht frei, bedeutet dies, dass eine Störung vorliegt. Die Funktion des Abförderns wird jedoch nicht gestoppt, sondern bleibt weiterhin aktiv, sofern nicht ein Überlastschutz des Förderantriebes anspricht, wodurch der Förderantrieb zur Sicherung des Förderantriebes gestoppt wird. Die Sensorauswertung wird automatisch zurückgestellt, aber gleichzeitig wird eine Fehlermeldung ausgegeben. Die Fehlermeldung kann als durchgeschliffenes Signal an eine zentrale Stelle übermittelt werden, wobei an der zentralen Stelle jedoch nicht erkennbar ist in welcher Förderzone die Staustörung vorliegt, sondern lediglich dass eine Staustörung bzw. Transportstörung vorliegt. Sobald sich das zu fördernde Stückgut durch die fortdauernde Bewegung durch den Förderantrieb von selbst fortbewegt, beispielsweise durch Losrütteln, wird das System in den Normalzustand überführt und es kann weiterhin ein Stückgütertransport erfolgen. Durch diese automatische Rückstellung der Stückgütersensoranordnung beim Abtransport können wertvolle Minuten von Produktionsausfallzeiten wettgemacht werden, die in der Industrie zu erheblichen Ausfallzeiten und Ausfallkosten führen können.

Die in der Zonensteuereinheit integrierte Logik-Regel-Steuereinheit weist eine für die Sensorauswertung vorgesehene Logikinvertierung auf. Durch diese Logikinvertierung ist es erstmalig möglich sowohl Lichtschranken, Lichttaster, induktive optische oder auf Ultraschalltechnik basierende Sensortechnik am Sensoreingang der Zonensteuereinheit anzuschließen ohne dabei über eine SPS oder eine auf einem PC laufende Software eine Programmierung der Zonensteuereinheit vorzunehmen und die Zonensteuereinheit an die Sensorkonstellation anzupassen. Hierdurch ist es ferner möglich Standardsensoren für die Stückgütersensoranordnung einzusetzen, die völlig ohne eigenständige Logik arbeiten. Mittels der Logikinvertierung kann beispielsweise kurzfristig vom Lichtschrankenbetrieb in den Lichttasterbetrieb gewechselt werden.

Die in der Zonensteuereinheit integrierte Logik-Regel-Steuereinheit weist eine für die Motorsteuerung vorgesehene Schutzbeschaltung und Initialisierung beim Starten des Förderantriebes auf, die ein Ein- und Ausschalten des laufenden Förderantriebes ermöglicht. Somit kann die Zonensteuereinheit gänzlich autark als steckerfertige Einheit produziert und ausgeliefert werden, da das System beim Starten einer laufenden Motorrolle über die Versorgungsspannung nicht in Störung übergeht.

Die Zonensteuereinheit ist bei Kommunikation des Zustandes 'Förderplatz frei' durch die Nachfolger-Zonensteuereinheit derart ausgebildet, dass ein kontinuierlicher Transport des Stückgutes durch Aktivierung des Förderantriebes erfolgt.

Die Stückgutsensoranordnung ist in Förderrichtung im letzten Drittel der jeweilig zugeordneten Förderzone angeordnet. Durch diese Anordnung der Stückgütersensoranordnung kann das System innerhalb der Förderzone staudrucklos die Stückgüter bis zu der Stückgütersensoranordnung transportieren.

Zur Kommunikation zwischen den Zonensteuereinheiten ist ein kombiniertes Signalleitung-Leistungskabel vorgesehen, die aus 2 x 4 mm² Kupferkabeln für die Spannungsversorgung und 5 x 0,75 mm² Kupferkabeln für die Kommunikation besteht und die Zonensteuereinheiten verbindet. Durch die Kombination der Logikleitung und der Leistungsleitung in einem Kabel wird nicht nur Material und Arbeit bei der Montage und Installation eingespart, sondern vereinfacht auch den späteren Austausch durch hauseigene Techniker. Wie im Stand der Technik üblich, können derartige Leitungen mit Steckern vorkonfektioniert werden, die dann einfach von außen an die Zonensteuereinheit angeschlossen werden. Selbstverständlich können diese Verbindungen als spritzwassergeschützte Kabelverschraubungen ausgebildet sein.

Die Signalleitung mit den 5 Kupferkabeladern ist exemplarisch derart aufgebaut: VLogik24V, Kommunikation stromabwärts, Kommunikation stromaufwärts, Fehler (durchgeschliffen), Block- bzw. Reversierbetrieb (durchgeschliffen).

Die Leistungsleitung überträgt in einer bevorzugten Ausführungsform 24 V für die zu steuernden Förderantriebe, beispielsweise 24 V Rollenmotor.

Die erste Zonensteuereinheit erhält ein Startsignal zum Transport eines Stückgutes und nach dem Erhalt des Startsignales transportiert dieses System ausschließlich autark durch Kommunikation der miteinander in Verbindung stehenden Zonensteuereinheiten das Stückgut, wobei eine Sensorüberwachung automatisch zurückgesetzt wird, falls die Stückgütersensoranordnung während des Förderns des Stückgutes nicht nach 2 bis 9 Sekunden meldet, dass das Stückgut den Sensorbereich verlassen hat.

Die Zonensteuereinheit zur Integration in eine staudrucklose Fördervorrichtung weist folgende Merkmale auf:
- Gehäuse der Schutzklasse IP54;
- im Gehäuse angeordnete Logik-Regel-Steuer-Elektronik mit
   integrierter Software, wobei die Software über Schalter auf der Elektronikplatine einstellbar ist.

Die Schalter auf der Elektronikplatine können als einfache DIP-Schalter und/oder als Dreh-, Tast- oder Steckbrückenschalter realisiert werden. Exemplarisch wird nachfolgend eine mögliche Schalterkonfiguration aufgezeigt:
S1 ON Motor rückwärts
S2 ON Sensors invertieren
S3 ON Motor Ein/Aus über Versorgung
S4 ON Motorfehler 2 wird verwendet
S5 OFF Blockabzug / ON Reversierbetrieb
S6 ON Steuerung durch externe Logik
S7 ON Förderrichtung umkehren
S8 ON Motorgeschwindigkeit 2 wird verwendet

### Erläuterung zu den Schalterfunktionen:

Die Drehrichtung des angeschlossenen Antriebes kann über den Schalter S1 geändert werden. Dies kann notwendig sein, wenn der Antrieb bauartbedingt um 180° gedreht in die Förderrichtung eingebaut ist.

Der Sensoreingang wird über den Schalter S2 so konfiguriert, dass ein High Signal anliegen muss, wenn der Sensor frei ist. Wird ein Sensor eingesetzt der ein Low Signal ausgibt, muss das Eingangssignal invertiert werden damit die interne Logik korrekt funktioniert. Auf diese Weise können viele unterschiedliche Sensortypen als Stückgütersensoranordnung verwendet werden.

Mittels des Schalters S3 kann ein anderer 24 V Aktor z.B. eine Magnetspule angeschlossen werden.

Generell ist zu sagen, dass in den meisten Fällen der Förderantrieb als 24 V Rollenmotor ausgebildet ist.

Bei Vorhandensein von zwei Förderantrieben kann über den Schalter S4 der Fehlerkontakt des zweiten Antriebs aktiviert und ausgewertet werden.

Generell ist zu sagen, dass ein Förderantrieb Fehlermeldungen über eine Rückleitung zur Zonensteuereinheit melden kann und diese Fehlermeldung von der Zonensteuereinheit als Störung des Förderantriebes ausgewertet wird.

Mithilfe des Schalters S5 kann ein Reversierbetrieb erfolgen, wenn über die Signalleitung ein Reversiersignal angelegt wird. Bei Blockabzug werden alle Plätze gleichzeitig angesteuert, d.h. die interne Logik wird nicht beachtet. Für den Reversierbetrieb ist ein zweiter Sensor notwendig damit beim Reversierbetrieb auch die Logik funktionsfähig ist.

Mithilfe des Schalters S6 kann die interne Logik ausgeschaltet und die Ansteuerung mit einer SPS ausgeführt werden.

Mit dem Schalter S7 wird die Förderrichtung und die Logik gedreht, d.h. der Vorgänger-Stauplatz wird zum Nachfolge-Stauplatz und umgekehrt. Dies kann notwendig sein, wenn die Zonensteuereinheit auf der gegenüberliegenden Seite der Motoranschlussleitungen installiert wird oder die Einspeisung der Zonensteuereinheit entgegengesetzt der Förderrichtung beginnt.

Wenn eine Umschaltung auf eine zweite Geschwindigkeit benötigt wird, kann Schalter S8 entsprechend gesetzt werden. Hierzu muss eine zweite Stückgütersensoranordnung an der Zonensteuereinheit angeschlossen sein. Die Umschaltung auf eine zweite Geschwindigkeit ist nur möglich, wenn der Nachfolgeplatz belegt ist oder dieser Stauplatz der letzte Platz im Stausystem ist. Ist der Folgeplatz frei oder wird dieser wieder frei, wird mit der Grundgeschwindigkeit gefördert.

Die in der Elektronik und Software integrierte Logik-, Regel- und Steuerfunktionalität weist eine Auswertung wenigstens einer an die Elektronik anschließbaren Sensoranordnung auf, wobei eine Auswahlmöglichkeit für unterschiedlich ausgestaltete Sensoranordnungen vorgesehen ist, eine Ansteuerung wenigstens einer Förderanordnung, ein Handshakeverfahren zur Kommunikation mit einer stromaufwärtigen und stromabwärtigen weiteren Zonensteuereinheit, die ohne eine zentrale Steuerungseinheit auskommt, und eine Rückstellfunktion für die Sensoranordnung zur Rückstellung des Sensorsignals, und/oder eine Logikinvertierung für die Sensorauswertung.

Die Motorsteuerung weist eine Schutzbeschaltung und eine Initialisierung beim Starten eines Förderantriebes auf, wobei ein Ein- und Ausschalten des laufenden Förderantriebes auch direkt durch Ein- oder Ausschalten der Versorgungsspannung zulässig ist.

Generell gilt für das Gesamtsystem folgendes:
Die Steuerlogik ermöglicht es, ein zu förderndes Stückgut von einer Aufgabestelle staudrucklos bis zur Abnahme zu transportieren. Die Kommunikation zwischen den Zonensteuereinheiten erfolgt über ein "Handshake"-Verfahren. Jeder Stauplatz wertet die Signale vom vorangehenden (stromaufwärtigen) und vom nachfolgenden (stromabwärtigen) Stauplatz eigenständig aus. Der jeweilige Förderantrieb wird entsprechend der vorhandenen Stausituation eigenständig von der Zonensteuereinheit der einzelnen Förderzone angesteuert. Die Übergabe von Förderzone (Stauplatz) zu Förderzone (Stauplatz) erfolgt immer nur auf Freiplatz. Sofern die Stückgütersensoranordnung einer Förderzone nicht belegt ist und der Vorgängerplatz ein zu förderndes Stückgut anmeldet, wird der Antrieb gestartet und das zu fördernde Stückgut übernommen. Wenn der Folgeplatz übernahmebereit ist, wird das zu fördernde Stückgut ohne zu stoppen weitertransportiert. Ist dies nicht der Fall, wird der Förderantrieb beim Erreichen des zu transportierenden Stückgutes an der Stückgütersensoranordnung gestoppt. Meldet sich kein weiteres zu förderndes Stückgut an, werden die Förderantriebe der "leeren" Plätze nach 5 Sekunden abgeschaltet. Dieses Abschalten führt zu einer erheblichen Erhöhung der Standzeit der verwendeten Förderantriebe und verringert erheblich die Energiekosten der Förderanlage.

Die "leeren" Förderzonen (Plätze) werden reaktiviert, sobald die stromabwärtige Stückgütersensoranordnung bzw. die stauplatzzoneneigene Stückgütersensoranordnung eine Belegung detektiert. Die Zonensteuereinheit bietet die Möglichkeit, eine autarke Schnell-/Langsamumschaltung zu realisieren. Hierfür wird eine zweite Stückgütersensoranordnung angeschlossen und die Funktion "zweite Geschwindigkeit" mittels DIP-Schalter aktiviert. Die langsame Geschwindigkeit wird separat eingestellt. Auch ein Reversierbetrieb mit Umschaltung der Förderlogik ist möglich. Wird diese Funktion benutzt, muss wie bei der Schnell-/Langsam-Umschaltung ein zweiter Sensor angeschlossen werden. Über den Stückgütersensoranordnungsanschluss der Zonensteuereinheit können auch Befehle einer SPS an die Zonensteuereinheit übertragen werden. Dann lässt sich die Zonensteuereinheit über binäre Signale aus einer SPS steuern, beispielsweise "Start Vor", "Start Rück" und die "Schnell-/ Langsamumschaltung".

## Patentansprüche

1. Staudrucklose Fördervorrichtung zum Transport von Stückgütern umfassend eine Rollenförderanordnung mit einer Mehrzahl von einzelnen Förderzonen, jeweils ausgestattet mit wenigstens:
- einer Stückgütersensoranordnung,
- einem Förderantrieb und
- einer elektronischen Zonensteuereinheit,
wobei die Zonensteuereinheit einen Leistungsteil mit einer Leistungsstromzufuhr zur Versorgung des jeweils zugeordneten Förderantriebs und einen Logik-Regel-Steuerteil mit einer Signalleitung aufweist, wobei die Signalleitung wenigstens die jeweils benachbarten, nämlich die stromabwärtige und die stromaufwärtige Zonensteuereinheiten miteinander kommunizierend verbindet,
die Zonensteuereinheit mittels der Stückgütersensoranordnung eine vorliegende Stückgütersituation, nämlich 'Stückgut in Förderzone vorhanden' oder'Förderzone frei', der jeweiligen Förderzone erkennt, die Zonensteuereinheit mittels der Leistungsstromzufuhr den jeweils zugeordneten Förderantrieb bedarfsweise ansteuert und
die Zonensteuereinheit die Stückgütersituation an die stromaufwärtigen und stromabwärtigen Zonensteuereinheiten kommuniziert, wobei ein Stückgütertransport von einer Förderzone zur anderen durch Übernahme des Stückgutes von der stromaufwärtigen Förderzone durch Aktivieren des Förderantriebes nur erfolgt, wenn die stromaufwärtige Zonensteuereinheit die Meldung 'Stückgut in Förderzone vorhanden' meldet und die Zonensteuereinheit der Stückgut aufnehmenden Förderzone 'Förderplatz frei' meldet, wobei die Zonensteuereinheit derart ausgebildet ist, dass die nicht benötigten Förderantriebe sofort oder nach einer Leerlaufzeit von weniger als 8 Sekunden nicht oder nicht mehr mit Strom versorgt werden und wobei die Logik-Regel-Steuersoftware vollständig in jeder Zonensteuereinheit vorhanden ist und in jeder Zonensteuereinheit über Schalter in der Zonensteuereinheit einstell- und individualisierbar ist.

2. Staudrucklose Fördervorrichtung nach Anspruch 1,
**dadurch gekennzeichnet, dass**
die in der Zonensteuereinheit integrierte Logik-Regel-Steuereinheit eine für die Sensorauswertung vorgesehene automatische Rückstellfunktion aufweist.

3. Staudrucklose Fördervorrichtung nach Anspruch 1 oder 2,
**dadurch gekennzeichnet, dass**
die in der Zonensteuereinheit integrierte Logik-Regel-Steuereinheit eine für die Sensorauswertung vorgesehene Logikinvertierung aufweist.

4. Staudrucklose Fördervorrichtung nach Anspruch 1, 2 oder 3,
**dadurch gekennzeichnet, dass**
die in der Zonensteuereinheit integrierte Logik-Regel-Steuereinheit eine für die Motorsteuerung vorgesehene Schutzbeschaltung und Initialisierung beim Starten des Förderantriebes aufweist, wobei ein Ein- und Ausschalten des laufenden Förderantriebes auch direkt durch Ein- oder Ausschalten der Versorgungsspannung zulässig ist.

5. Staudrucklose Fördervorrichtung nach einem der vorangehenden Ansprüche,
**dadurch gekennzeichnet, dass**
die Zonensteuereinheit bei Kommunikation des Zustandes 'Förderplatz frei' durch die Nachfolger-Zonensteuereinheit derart ausgebildet ist, dass ein kontinuierlicher Transport des Stückgutes durch Aktivierung des Förderantriebes erfolgt.

6. Staudrucklose Fördervorrichtung nach einem der vorangehenden Ansprüche,
**dadurch gekennzeichnet, dass**
die Stückgutsensoranordnung in Förderrichtung im letzten Drittel der jeweilig zugeordneten Förderzone angeordnet ist.

7. Staudrucklose Fördervorrichtung nach einem der vorangehenden Ansprüche,
**dadurch gekennzeichnet, dass**
zur Kommunikation zwischen den Zonensteuereinheiten ein kombiniertes Signalleitung-Leistungskabel vorgesehen ist, die aus 2 x 4 mm² Kupferkabeln für die Spannungsversorgung und 5 x 0,75 mm² Kupferkabeln für die Kommunikation besteht und die Zonensteuereinheiten verbindet.

8. Staudrucklosfördervorrichtungssteuerungsverfahren mit einer staudrucklosen Fördervorrichtung nach einem der vorangehenden Ansprüche,
**dadurch gekennzeichnet, dass**
die erste Zonensteuereinheit ein Startsignal zum Transport eines Stückgutes erhält und nach dem Erhalt des Startsignales ausschließlich autark durch Kommunikation der miteinander in Verbindung stehenden Zonensteuereinheiten das Stückgut transportiert, wobei eine Sensorüberwachung automatisch zurückgesetzt wird, falls die Stückgütersensoranordnung während des Förderns des Stückgutes nicht nach 2 bis 9 Sekunden meldet, dass das Stückgut den Sensorbereich verlassen hat.

9. Zonensteuereinheit zur Integration in eine staudrucklose Fördervorrichtung nach einem der Ansprüche 1 bis 7 und zur Umsetzung des Staudrucklosfördervorrichtungssteuerungsverfahren nach Anspruch 8 aufweisend die Merkmale:
- Gehäuse der Schutzklasse 1P54;
- im Gehäuse angeordnete Logik-Regel-Steuer-Elektronik mit integrierter Software, wobei die Software über Schalter auf der Elektronikplatine einstellbar ist.

10. Zonensteuereinheit nach Anspruch 9,
**dadurch gekennzeichnet, dass**
die in der Elektronik und Software integrierte Logik-, Regel- und Steuerfunktionalität aufweist:
- eine Auswertung wenigstens einer an die Elektronik anschließbaren Sensoranordnung, wobei eine Auswahlmöglichkeit für unterschiedlich ausgestaltete Sensoranordnungen vorgesehen ist,
- eine Ansteuerung wenigstens einer Förderanordnung,
- ein Handshakeverfahren zur Kommunikation mit einer stromaufwärtigen und stromabwärtigen weiteren Zonensteuereinheit, die ohne eine zentrale Steuerungseinheit auskommt,
und
- eine Rückstellfunktion für die Sensoranordnung zur Rückstellung des Sensorsignals,
und/oder
eine Logikinvertierung für die Sensorauswertung.

11. Zonensteuereinheit nach Anspruch 9 oder 10,
**dadurch gekennzeichnet, dass**
die Motorsteuerung eine Schutzbeschaltung und eine Initialisierung beim Starten eines Förderantriebes aufweist, wobei ein Ein- und Ausschalten des laufenden Förderantriebes auch direkt durch Ein- oder Ausschalten der Versorgungsspannung zulässig ist.
